# FASCICULE DE BREVET EUROPEEN

(11) **EP 3 398 009 B1**
(45) Date de publication et mention de la délivrance du brevet: **15.04.2026**
(21) Numéro de dépôt: 16822174.5
(22) Date de dépôt: 22.12.2016
(51) Int. Cl.: G02C 7/08, G02C 7/10

(54) **PROCÉDÉ DE COMMANDE D'UN SYSTÈME OPHTALMIQUE À PARTIR D'UNE MESURE ET D'UNE INFORMATION OBTENUE PAR UN DISPOSITIF ÉLECTRONIQUE EXTERNE**
VERFAHREN ZUR STEUERUNG EINES OPHTALMISCHEN SYSTEMS ANHAND EINER MESSUNG UND EINER MITHILFE EINER EXTERNEN ELEKTRONISCHEN VORRICHTUNG ERHALTENEN INFORMATION
METHOD FOR CONTROLLING AN OPHTHALMIC SYSTEM FROM A MEASUREMENT AND INFORMATION OBTAINED BY AN EXTERNAL ELECTRONIC DEVICE

(30) Priorité: 30.12.2015 EP 15307169
(43) Date de publication de la demande: 07.11.2018
(73) Titulaire: Essilor International (Compagnie Générale d'Optique), 94220 Charenton-le-Pont (FR)
(72) Inventeur: BOUCHIER, Aude, 94227 Charenton Cedex (FR); PERROT, Stéphane, 94227 Charenton Cedex (FR); BALLET, Jérôme, 94227 Charenton Cedex (FR); ESCAICH, David, 94227 Charenton Cedex (FR); ARCHAMBEAU, Samuel, 94227 Charenton Cedex (FR); CHAUDAT, Willy, 94227 Charenton Cedex (FR); CANO, Jean-Paul, 94227 Charenton Cedex (FR)
(74) Mandataire: Plasseraud IP
(86) Numéro de dépôt international: PCT/EP2016/082468
(87) Numéro de publication internationale: WO 2017/114759

(56) Documents cités:
- WO-A1-2015/186010
- CN-U- 204 719 343
- US-A1- 2014 268 029
- US-A1- 2014 340 630
- US-A1- 2015 295 610
- US-A1- 2015 358 614
- US-B1- 8 960 898

## Description

L'invention concerne un système ophtalmique comprenant au moins un élément optique, tel qu'un verre de lunette, dont la commande d'une variation d'une fonctionnalité est améliorée. On connait des systèmes ophtalmiques, tels que des montures comportant des verres électrochromes, dont la valeur de la transmission peut varier automatiquement en fonction de la luminosité ambiante dans laquelle se trouve l'utilisateur. Le verre électrochrome est relié électriquement à un processeur de commande autonome et à un ou plusieurs capteurs adaptés pour mesurer un flux lumineux, le processeur étant adapté pour commander la valeur de transmission du verre à transmission variable en fonction du flux lumineux mesuré. Des procédés et dispositifs de l'art antérieur sont divulgués dans US8960898B1.

Il est toutefois difficile de commander efficacement un tel système ophtalmique en fonction du flux lumineux mesurés au moyen de ses seuls capteurs. En effet, les capteurs intégrés dans la monture ne donnent pas nécessairement une mesure suffisamment précise, par exemple lorsque les capteurs sont mal positionnés par rapport au flux lumineux, ce qui limite la performance de la commande de la transmission des verres. Il peut en outre se révéler difficile d'intégrer un grand nombre de capteurs dans un même système ophtalmique afin de fiabiliser la ou les mesures acquises et d'optimiser la commande du système ophtalmique.

Enfin, la commande de la variation d'une fonctionnalité d'un élément optique peut dépendre également d'autres données propres à l'utilisateur du système ophtalmique, par exemple sa sensibilité personnelle à la lumière ou ses activités (lecture, sport, conduite). La commande peut également dépendre d'informations externes, par exemples des données de géolocalisation ou météorologiques (présence d'une source lumineuse proche, soleil rasant, passage/sortie de tunnel, etc.), ainsi que liés à l'environnement proche de l'utilisateur (présence d'interlocuteurs ou d'une foule nombreuse par exemple).

L'invention vise à résoudre au moins partiellement les inconvénients exposés ci-dessus et, plus particulièrement, vise à commander la variation d'une fonctionnalité d'un élément optique, sans nécessairement que le système ophtalmique dispose d'un grand nombre de capteurs, afin d'apporter un confort visuel amélioré à l'utilisateur.

Ainsi, l'invention concerne un procédé de commande d'un système ophtalmique comme défini dans la revendication 1.

La sélection de certaines informations externes combinées à la ou les mesures acquises par les capteurs du système permet d'améliorer la pertinence de l'instruction pour commander la variation de la fonctionnalité liée à l'élément optique. Le confort proposé par l'élément optique est donc sensiblement amélioré pour l'utilisateur.

Selon une réalisation, la détermination de l'instruction est effectuée par le dispositif électronique, le procédé comportant en outre l'étape de :
- transmettre l'instruction depuis le dispositif électronique au processeur du système ophtalmique avant d'exécuter l'instruction pour commander la variation de la fonctionnalité liée à l'élément optique.

Selon une réalisation, la détermination de l'instruction est effectuée par le processeur du système ophtalmique, le procédé comprenant en outre l'étape de :
- transmettre l'information sélectionnée depuis le dispositif électronique au processeur du système ophtalmique avant de déterminer l'instruction à partir de la mesure acquise par le capteur et de l'information sélectionnée.

Selon une réalisation, la détermination de l'instruction à partir de la mesure acquise par le capteur et de l'information obtenue par le dispositif électronique est effectuée à partir d'un modèle prédéterminé de la fonctionnalité de l'élément optique.

En particulier, après la commande de la variation de la fonctionnalité liée à l'élément optique, le procédé comprend en outre les étapes de :
- modifier à partir d'une interface homme-machine la fonctionnalité du système ophtalmique, et
- adapter le modèle de la fonctionnalité de l'élément optique en fonction de la modification de la fonctionnalité effectuée à partir de l'interface homme-machine.

Selon l'invention, l'information sélectionnée est associée à une localisation et/ou à une période de temps correspondant à celle(s) de la mesure acquise par le capteur.

Selon une réalisation, la mesure acquise par le capteur comprend au moins un élément parmi :
- une mesure de proximité ;
- une mesure de géolocalisation ;
- une mesure d'accélération ;
- une mesure gyroscopique ;
- une mesure de pression ;
- une mesure de température ;
- une mesure de suivi d'un mouvement d'au moins un œil ;
- une mesure de télémétrie ;
- une collecte d'énergie, notamment une énergie mécanique, électrique ou thermique
- un signal audio ;
- un signal vidéo ;
- une mesure d'intensité lumineuse, dans au moins une bande de fréquence du spectre électromagnétique.

Selon une réalisation, le dispositif électronique est un téléphone portable, une tablette numérique, une montre connectée, un ordinateur de bureau, un ordinateur portable, un serveur distant accessible par exemple via l'internet, un dispositif intégré dans un véhicule automobile ou dans un GPS, un vêtement, une paire de chaussures, un masque, un accessoire connecté ou dans un GPS, ou une paire de lunettes comportant des verres connectés.

Selon une réalisation, l'information obtenue par le dispositif électronique comprend au moins un élément ou une combinaison d'éléments parmi :
- une information météorologique ;
- une information de géolocalisation ;
- une information horodatée ;
- une information relative à un environnement de l'utilisateur du système ophtalmique.
- une information relative à une mesure du capteur précédemment acquise et/ou une valeur de variation de fonctionnalité précédemment commandée du système ophtalmique.

Selon une réalisation, on sélectionne une pluralité d'informations à partir d'une pluralité de dispositifs électroniques externes adaptés pour communiquer avec l'interface de communication du système ophtalmique.

Selon une réalisation, l'élément optique est un verre ophtalmique de type électroactif, et dans lequel la variation de la fonctionnalité liée au verre comporte une modification d'au moins une caractéristique d'une cellule électroactive comprise dans le verre.

En particulier, l'élément optique est un verre électrochrome, et dans lequel la fonctionnalité liée à l'élément optique comprend la transmission du verre.

Selon une réalisation, le procédé comporte en outre les étapes de :
- horodater la mesure acquise par le capteur et l'information obtenue par le dispositif électronique, et
- stocker la mesure et/ou l'information horodatée dans une mémoire du dispositif électronique ou dans une base de données externe, la base de données étant adaptée pour communiquer avec le dispositif électronique par un réseau de données.

Selon une réalisation, le procédé comporte en outre les étapes de :
- géolocaliser la mesure acquise par le capteur et l'information obtenue par le dispositif électronique, et
- stocker la mesure et/ou l'information géolocalisée dans une mémoire du dispositif électronique ou dans une base de données externe, la base de données étant adaptée pour communiquer avec le dispositif électronique par un réseau de données.

L'invention concerne également un programme informatique comportant des instructions pour la mise en oeuvre du procédé selon l'invention, lorsque le programme informatique est exécuté par un processeur.

L'invention concerne également un ensemble comportant :
- un système ophtalmique comprenant :
   - au moins un élément optique,
   - au moins un capteur de mesure,
   - une interface de communication avec un dispositif électronique externe communiquant, et
   - un processeur relié à l'élément optique et apte à commander une variation d'une fonctionnalité liée à l'élément optique,
- un dispositif électronique adapté pour effectuer les opérations suivantes :
   - réceptionner une mesure acquise par le capteur ;
   - sélectionner au moins une information ;
   - déterminer, à partir de la mesure acquise par le capteur et de l'information, une instruction à destination du processeur pour commander la variation de la fonctionnalité liée à l'élément optique.

On décrit maintenant l'invention à l'aide des dessins, dans lesquels :
- La figure 1 est une représentation schématique d'un ensemble comprenant un système ophtalmique et un dispositif électronique selon un premier mode de réalisation ;
- La figure 2 est une représentation schématique du système ophtalmique de la figure 1 ;
- La figure 3 est une représentation schématique d'un ensemble comprenant un système ophtalmique et une pluralité de dispositifs électronique selon un deuxième mode de réalisation ; et
- La figure 4 est une représentation schématique d'un ensemble comprenant une pluralité de systèmes optiques et une pluralité de dispositifs électroniques selon un troisième mode de réalisation.

Il est à noter que sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

Par souci de clarté, seuls les éléments utiles à la compréhension des modes de réalisation décrits ont été représentés et seront détaillés.

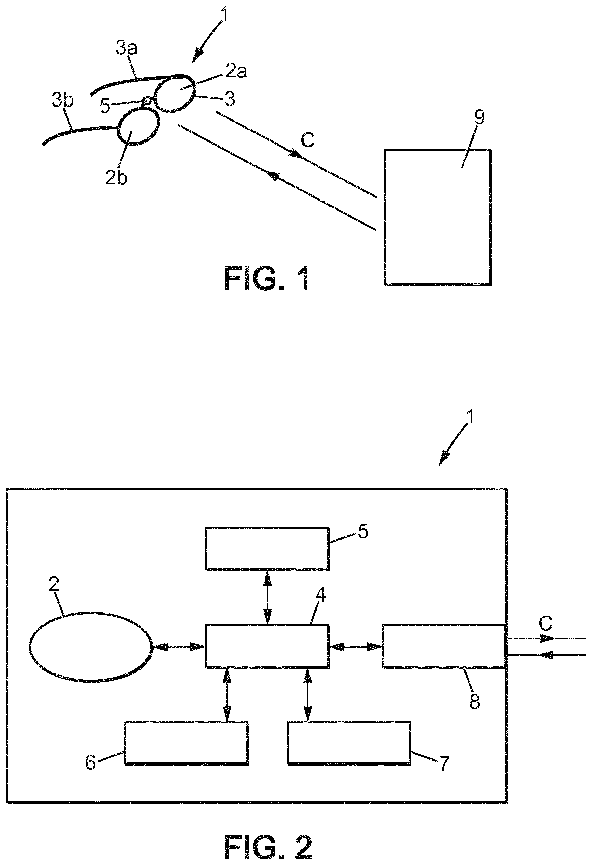

La figure 1 est une vue schématique d'un ensemble comprenant un système ophtalmique 1 et un dispositif électronique externe communiquant 9. Par « externe », on entend que le dispositif électronique 9 est distinct du, ou encore extérieure au, système ophtalmique 1.

Le système ophtalmique 1 comprend au moins un élément optique 2. En particulier, comme représenté sur cette figure 1, le système 1 comprend une monture 3, ayant notamment deux branches 3a, 3b. Selon la réalisation de la figure 1, le système ophtalmique 1 comprend deux éléments optiques 2a, 2b montés dans la monture 3. Dans la suite, on décrit l'invention en lien avec un seul élément optique 2. Toutefois, il est entendu que l'invention peut également s'appliquer à un système ophtalmique 1 comprenant plusieurs éléments optiques 2 comme illustré sur la figure 1.

Un élément optique 2 peut être tout dispositif optique destiné à être placé dans, sur, proche, sensiblement en regard ou en amont d'un organe de vision, tel qu'un oeil, dans le sens d'un rayon lumineux généré par une source lumineuse. En particulier, l'élément optique 2 est un verre ophtalmique monté sur le système ophtalmique 1, tel qu'une paire de lunette, destiné à une personne humaine.

Un tel élément optique 2 peut avoir un effet correctif ou non. L'élément optique 2 peut être à titre d'exemple opacifiant (lunettes de soleil) ou informatif (affichage d'informations).

L'élément optique 2 comporte une fonctionnalité variable.

Selon une réalisation, l'élément optique 2 est un verre de type électroactif. Dans ce mode de réalisation, la variation de la fonctionnalité liée au verre comporte une modification d'au moins une caractéristique d'une cellule électroactive comprise dans le verre.

On entend par « verre électroactif » un dispositif optique pour lequel au moins une caractéristique varie sous l'influence d'un signal électrique et/ou éléctromagnétique. Typiquement, une variation de l'amplitude d'un signal électrique appliqué à un verre électroactif modifie une fonctionnalité de ce verre.

Dans un mode de réalisation, l'élément optique 2 peut être un verre à variation d'amplitude par exemple à transmission commandée électriquement, à variation de teinte (par exemple grâce à des cristaux liquides), et/ou à polarisation active. Plus particulièrement, l'élément optique 2 peut être un verre électrochrome, dans lequel la fonctionnalité liée à l'élément optique 2 comprend la transmission du verre. La fonctionnalité peut par exemple concerner l'allumage/extinction, le niveau de transmission, les gammes de transmission minimum/maximum, le nombre et la valeur de paliers de transmission dans le cas d'utilisation de paliers de transmission et/ou la vitesse de transition entre deux paliers de transmission de l'élément optique 2.

Toutefois, l'invention n'est pas limitée au verre électrochrome et peut également concerner d'autres types de verres électroactifs, tels que des verres à cristaux liquides (« *liquid crystal display -* LCD ») par exemple.

Selon une autre réalisation, l'élément optique 2 est un verre informatif, comprenant par exemple un verre passif combiné à un miroir holographique. La variation de la fonctionnalité de cet élément optique 2 permet ainsi d'afficher des informations sur le verre à destination de l'utilisateur.

De façon plus générale, l'élément optique 2 peut être tout dispositif actif comprenant une variation d'une fonctionnalité.

Comme illustré schématiquement sur la figure 2, le système ophtalmique 1 comprend un processeur 4 relié à l'élément optique 2 et apte à commander la variation de la fonctionnalité liée à l'élément optique 2.

Le système ophtalmique 1 comprend également un capteur 5, disposé sur la monture 3 ou directement au niveau d'un élément optique 2. Le capteur 5 est par exemple disposé au niveau du pont nasal de la monture 3 comme illustré sur la figure 1.

Le capteur 5 peut être un capteur d'éclairement, tel qu'une photodiode, ou un micro-capteur d'éclairement (également appelé ALS pour « Ambient Light Sensor », capteur de lumière ambiante en français). Le capteur 5 peut ainsi mesurer l'éclairement en tant que flux lumineux reçu par unité de surface (en lux ou en W.m⁻²). En variante, le capteur 5 peut également mesurer d'autres valeurs de flux lumineux, telle qu'une intensité, ou une luminance visuelle ou photométrique. Le capteur 5 peut par exemple mesurer le flux lumineux dans le visible et/ou dans l'ultraviolet.

Le capteur 5 peut également être un capteur de lumière adapter pour mesurer un degré de polarisation de la lumière, notamment afin d'activer une fonctionnalité de coupure de polarisation. Le capteur 5 peut également être adapté pour mesurer le spectre lumineux visible et/ou non visible afin d'activer une fonctionnalité de coupure sélective en longueur d'onde.

Le capteur 5 est ainsi adapté pour mesurer le flux lumineux ambiant arrivant sur le système ophtalmique 1. Par « ambiant », on entend le flux lumineux dans lequel se trouve le système ophtalmique 1. Le flux lumineux ambiant varie donc en fonction de conditions extérieures au système ophtalmique 1, tels que les conditions météorologiques lorsque le système ophtalmique 1 se trouve en extérieur, ou de l'éclairage d'une pièce lorsque le système ophtalmique 1 se trouve en intérieur par exemple.

Le capteur de mesure 5 peut également mesurer un paramètre autre que le flux lumineux, et peut ainsi être :
- un capteur de proximité fonctionnant par exemple via une mesure de temps d'émission/réception d'une onde électromagnétique. La mesure de proximité peut être faite entre le système ophtalmique 1 et son utilisateur, entre le système ophtalmique 1 et un dispositif électronique externe, entre le système ophtalmique 1 et un autre système ophtalmique, etc. ;
- un capteur d'une mesure de localisation, par exemple de géolocalisation. La mesure de géolocalisation peut correspondre à au moins un élément parmi une localisation géographique (par exemple via une latitude et une longitude), une position dans l'espace (par exemple dans un référentiel galiléen), une mesure de proximité par rapport à un autre objet, une mesure de proximité ou de présence sur un site particulier (cinéma, restaurant, site touristiques, etc.). Un tel capteur est typiquement un dispositif GPS (pour « global positioning system », système de positionnement mondial en français) ;
- un inclinomètre pour l'acquisition d'une mesure d'inclinaison, permettant par exemple de déterminer la mesure de l'utilisateur du système ophtalmique 1 ;
- un gyroscope pour l'acquisition d'une mesure gyroscopique ;
- un télémètre pour l'acquisition d'une mesure de distance ;
- un manomètre pour l'acquisition d'une mesure de pression ;
- un thermomètre pour l'acquisition d'une mesure de température ;
- un dispositif « eye tracker » (pour dispositif de suivi du mouvement de l'oeil en français) apte à acquérir une mesure de suivi d'un mouvement d'au moins un œil de l'utilisateur du système ophtalmique 1 ;
- un microphone pour l'acquisition d'un signal sonore ;
- une caméra pour l'acquisition d'un signal vidéo, par exemple une caméra plénoptique ;
- un capteur d'une mesure d'intensité lumineuse, dans au moins une bande de fréquence du spectre électromagnétique ;
- un dispositif de collecte apte à collecter une énergie électrique, par exemple acquise via un capteur solaire (cellule photovoltaïque) ou un capteur d'une énergie mécanique (capteur de vibrations, par exemple sur un visage), une énergie thermique, etc.

Le système ophtalmique 1 peut en outre comprendre une pluralité de capteurs 5, notamment deux capteurs 5, mesurant une même valeur ou des valeurs différentes. Dans la suite, on décrit l'invention en lien avec un seul capteur 5. Toutefois, il est entendu que l'invention peut également s'appliquer à un système ophtalmique 1 comprenant une pluralité de capteurs 5.

Le système ophtalmique 1 peut comprendre d'autres éléments, telle qu'une batterie 6 permettant d'alimenter en énergie les composants électroniques du système ophtalmique 1. Le système ophtalmique 1 peut également comprendre une mémoire 7 adaptée pour stocker des paramètres ou des données liées à la fonctionnalité de l'élément optique 2. Le fait que ces données soient directement stockées sur une mémoire 7 du système ophtalmique 1 permet d'éviter que celles-ci soient perdues, par exemple dans le cas où ces données seraient stockées sur un autre dispositif électronique.

Le système ophtalmique 1 comprend également une interface de communication 8. L'interface de communication 8 est reliée (par exemple via une liaison filaire ou sans-fils) à l'élément optique 2. L'interface de communication 8 est adapté pour transmettre/recevoir des données entre le système ophtalmique 1 et le dispositif électronique 9.

Le dispositif électronique 9 peut être un téléphone portable, une tablette numérique, une montre connectée, un ordinateur de bureau ou un ordinateur portable, un serveur distant accessible par exemple via l'internet, un terminal intégré dans un véhicule automobile ou dans un GPS, un terminal dédié utilisé pour la fabrication et/ou la configuration de verres ophtalmiques, un vêtement, une paire de chaussures, un masque, un accessoire connecté ou dans un GPS. De façon générale, le dispositif électronique 9 peut être tout dispositif électronique apte à être connecté au système ophtalmique 1.

Le dispositif électronique 9 peut également comporter un capteur tel que décrit ci-avant pour le système ophtalmique 1 avec la référence 5. En particulier, le dispositif électronique 9 peut également être un autre système ophtalmique tel que décrit ci avant, par exemple une paire de lunette.

La liaison entre le dispositif électronique 9 et le système ophtalmique 1 peut-être filaire, sans-fils, optique, à induction, etc.

Plus particulièrement, le système ophtalmique 1 peut être connecté au dispositif électronique 9 via un réseau de communication C.

Ainsi, pour une liaison radio courte distance (typiquement inférieure à 100 mètres), le réseau de communication C peut être de type Bluetooth (marque déposée), ou ZigBee (marque déposée) pour des utilisations an très bas débit. Le réseau de communication C peut également être de type wifi pour des utilisations en haut débit ou un réseau orienté domotique. Pour une liaison radio longue distance (typiquement supérieure à un kilomètre), le réseau de communication C peut être de type ZigFox (marque déposée), LORA (marque déposée) basé sur le protocole LoRaWAN (pour « Long Range Wide-area network », réseau étendu à longue portée en français), GSM (pour « Global system for mobile communication »), 3G ou 4G.

Pour une liaison optique courte distance (pouvant typiquement couvrir l'intérieur d'une pièce), le réseau de communication C peut être un réseau LiFi (marque déposée) ou un réseau QI pour une liaison à induction magnétique très courte distance.

D'autres protocoles pourront être utilisés, tels que par exemple un réseau IP, Ethernet, TCP/UDP, Internet, un réseau utilisant un émetteur-récepteur asynchrone universel, par exemple de type UART, pour « Universal Asynchronous Receiver Transmitter » en anglais, un réseau reposant sur le protocole http, pour « Hyper Text Transfert Protocol » (pour « protocole de transfert hypertexte » en français), etc.

Le dispositif électronique 9 peut également être connecté à un réseau de données D. On entend par « réseau de données », tout type de réseau apte à fournir des données complémentaires aux données du réseau de communication C. Dans un mode de réalisation, le réseau de données D est distinct du réseau de communication C. En particulier, lorsque le réseau de communication C est un réseau local (par exemple bluetooth), le réseau de données D peut par exemple être un réseau étendu (par exemple Internet via une connexion 4G).

On décrit ci-après le procédé de commande de la variation de la fonctionnalité lié à un élément optique 2 selon un premier mode de réalisation de l'invention illustré par la figure 1. Selon ce premier mode de réalisation, on considère un unique utilisateur d'un système ophtalmique 1, par exemple un porteur d'une paire de lunette.

Dans une première étape du procédé, dite étape d'acquisition de mesure, on acquière une mesure par le capteur 5 du système ophtalmique 1.

Dans une deuxième étape du procédé, on transmet la mesure acquise à un dispositif électronique externe communiquant 9. La mesure est notamment transmise par l'interface de communication 8 du système ophtalmique 1 au dispositif électronique 9 via le réseau de communication C.

Lors de cette deuxième étape, on peut également transmettre d'autres données liées à l'élément optique 2, susceptibles d'être utilisées pour déterminer l'instruction de la commande de la variation de la fonctionnalité. Ces données peuvent concerner le profil de l'utilisateur, notamment ses préférences relatives à sa sensibilité lumineuse par exemple. Ces données peuvent également concerner des données d'usage du système ophtalmique 1, tels que le nombre d'heures de fonctionnement, la consommation courante, des statistiques sur les niveaux de transmission utilisés, des statistiques sur les dynamiques de changement de transmission, le niveau de la batterie 6, etc. On qualifie par la suite d'internes ces données transmises par le système ophtalmique 1 au dispositif électronique 9.

Dans une troisième étape, dite étape d'obtention, le dispositif électronique 9 obtient, outre les données internes, une ou plusieurs informations.

Les informations obtenues être des données préalablement stockées sur une mémoire (non représentée) du dispositif électronique 9 ou mesurées par un capteur du dispositif électronique 9 le cas échéant. Les informations peuvent également être préalablement stockées sur une base de données 10 et transmises au dispositif électronique 9 par un serveur 11 via le réseau de données D. Ainsi, on qualifie d'externes les informations obtenues par le dispositif électronique 9, par opposition aux données internes provenant du système ophtalmique 1 de l'utilisateur.

La ou les informations externes obtenues par le dispositif électronique 9 comprennent au moins un élément ou une combinaison d'éléments parmi :
- une information météorologique (par exemple des données locales de pression, hygrométrie, température, ensoleillement, vitesse du vent, chute de pluie/neige, etc.) ;
- une information de géolocalisation, permettant notamment de déterminer une activité de l'utilisateur du système ophtalmique 1 (si l'utilisateur se trouve au restaurant ou au cinéma par exemple) ;
- une information horodatée ;
- une information relative à un environnement de l'utilisateur du système ophtalmique 1, par exemple concernant la présence d'un obstacle, d'un lieu particulier (comme un tunnel) ou d'autres personnes à proximité de l'utilisateur du système ophtalmique 1 ; et/ou
- une information relative à une mesure du capteur précédemment acquise et/ou une valeur de variation de fonctionnalité précédemment commandée du système ophtalmique 1.

Dans une quatrième étape du procédé, dite étape de sélection ou d'agrégation, on sélectionne au moins une information obtenue par le dispositif électronique 9. En particulier, l'information sélectionnée correspond de préférence à une localisation et/ou à une période de temps correspondant à celle(s) de la mesure acquise par le capteur 5 du système ophtalmique 1. Il est ainsi possible d'associer des données internes transmises système ophtalmique 1 et des informations externes correspondant à des mesures de temps/localisation identiques ou proches. Il est également possible de sélectionner plusieurs informations si nécessaire.

Dans une cinquième étape, on détermine une instruction au moins à partir de la mesure acquise par le capteur et de l'information sélectionnée.

Selon une réalisation, la détermination de l'instruction est effectuée par le processeur 4 du système ophtalmique 1. Selon cette réalisation, on transmet préalablement l'information sélectionnée depuis le dispositif électronique 9 au processeur 4 du système ophtalmique 1 avant de déterminer l'instruction à partir de la mesure acquise par le capteur 5 et de l'information sélectionnée.

Selon une autre réalisation préférée, la détermination de l'instruction est effectuée par un processeur (non représenté) du dispositif électronique 9. En effet, le dispositif électronique 9 est susceptible de disposer d'une puissance de calcul supérieure à celle du système ophtalmique 1, et donc de déterminer plus rapidement l'instruction pour commander la variation de la fonctionnalité de l'élément optique 2. Ceci permet également de limiter la consommation de l'énergie stockée par la batterie 6 du système ophtalmique 1, et donc d'augmenter la durée d'autonomie du système ophtalmique 1.

Selon l'invention, la détermination de l'instruction à partir de la mesure acquise par le capteur 5 et de l'information sélectionnée est effectuée à partir d'un modèle prédéterminé de la fonctionnalité de l'élément optique 2. Le modèle de la fonctionnalité peut être de tout type, et notamment basé sur la logique floue ou sur des logiques modales. Le modèle de la fonctionnalité comprend ainsi au moins comme données d'entrée la valeur de la mesure acquise par le capteur 5 ainsi que l'information sélectionnée. Le modèle peut également prendre en compte d'autres paramètres d'entrée, tels que d'autres données internes concernant le système ophtalmique 1 ou l'utilisateur.

A titre d'exemple purement illustratif, le modèle peut prévoir que, lorsque l'utilisateur situé dans un lieu particulier, par exemple à son bureau de travail, l'élément optique 2 doit laisser entièrement passer la lumière quelle que soit le flux lumineux mesuré par un capteur 5 du système ophtalmique 1. Le modèle détermine alors une instruction dans ce sens destinée à être transmise à l'élément optique 2.

Selon un autre exemple, le modèle peut prévoir que, lorsque l'utilisateur conduit (le dispositif électronique 9 étant par exemple l'ordinateur de bord de la voiture), l'élément optique 2 doit être constamment opacifiant afin que l'utilisateur dispose d'une meilleure visibilité pendant tout son trajet. Le modèle détermine alors une instruction pour commander une valeur de transmission réduite constante de l'élément optique 2 tant que les informations obtenues par le dispositif électronique 9 indiquent que l'utilisateur se trouve dans la voiture ou qu'il la conduit.

Selon encore un autre exemple, le modèle peut prévoir de diminuer la transmission de l'élément optique 2 de l'utilisateur lorsque celui se trouve en présence d'interlocuteurs. Le modèle détermine alors un niveau de transmission réduit en fonction de l'intensité lumineuse dans laquelle se trouve l'utilisateur mesuré par le capteur 5, et en fonction des informations obtenues par le dispositif électronique 9 indiquant la présence d'autres personnes autour de l'utilisateur.

Dans une sixième étape, on transmet l'instruction au processeur 4 du système ophtalmique 1, notamment via l'interface de communication 8 du système ophtalmique 1 le cas échéant.

Enfin, dans une septième étape, le processeur 4 du système ophtalmique 1 exécute l'instruction pour commander la variation de la fonctionnalité liée à l'élément optique 2.

Ainsi, la fonctionnalité de l'élément optique 2 peut être commandée de façon automatique. Par « automatique », on entend qu'il n'est pas nécessaire qu'il y ait d'interaction physique avec l'utilisateur du système ophtalmique afin de commander la fonctionnalité de l'élément optique 2. En particulier, le système ophtalmique 1 ne comprend de préférence pas de moyen permettant d'interagir avec l'utilisateur du système ophtalmique 1, par exemple une interface tactile ou un bouton.

Toutefois, dans une huitième étape facultative, si l'utilisateur n'est pas satisfait de la variation de la fonctionnalité de l'élément optique 2, il peut modifier à partir d'une interface homme-machine la fonctionnalité du système ophtalmique. Selon cette huitième étape, le modèle peut être adapté par apprentissage en fonction de la modification de la fonctionnalité effectuée par l'utilisateur. Le modèle de la fonctionnalité de l'élément optique peut ainsi être modifié et être progressivement optimisé pour parvenir à un meilleur confort et un réglage de commande préféré de l'utilisateur du système ophtalmique 1.

Selon une réalisation, l'ensemble des données nécessaires à la modification de la fonctionnalité ainsi que le modèle de commande peuvent être stockée sur la mémoire 7 du système ophtalmique 1. Ainsi, le système ophtalmique 1 peut permettre d'accéder à ces données depuis une interface homme-machine d'un dispositif électronique. L'accès à l'interface homme-machine depuis le dispositif électronique peut également permettre d'effectuer des mises à jour, dépanner le système ophtalmique 1, sauvegarder un profil utilisateur, etc.

Une fois transmises au dispositif électronique 9, les données internes, notamment la mesure du capteur 5, et l'information externe obtenue par le dispositif électronique peuvent être horodatées puis stockées dans une mémoire (non représentée) du dispositif électronique 9. En variante, les données internes et les informations externes sont stockées dans une base de données externe 10, la base de données 10 étant adaptée pour communiquer avec le dispositif électronique 9 par le réseau de données D.

De la même façon, les données internes transmises par le système ophtalmique, et notamment la mesure du capteur 5, et l'information externe obtenue par le dispositif électronique 9 peuvent être géolocalisées puis stockées dans une mémoire du dispositif électronique 9 ou dans la base de données D.

Ces données internes et informations externes préalablement acquises et qui concernent l'historique d'utilisation du système ophtalmique 1 peuvent ainsi être réutilisées par la suite. En particulier, celles-ci peuvent permettre de conserver certaines données concernant l'utilisateur, par exemple l'historique de la météorologie dans la zone de l'utilisateur, les activités réalisées par l'utilisateur, sa localisation passée, etc.

Il est également possible de suivre l'historique de certaines données concernant l'élément optique 2, par exemple le taux d'allumage/d'extinction de l'élément optique 2, sa transmission ou des images affichées pour savoir si l'utilisateur est en phase de lecture.

Ainsi, les données internes et les informations externes préalablement acquises puis stockées peuvent être utilisées de façon à améliorer le confort de l'utilisateur, à permettre un suivi d'informations relatif à l'utilisateur (taux d'exposition aux UV par exemple ou consommation du système ophtalmique 1), à surveiller les disfonctionnements potentiels du système ophtalmique 1 (consommation du système ophtalmique 1, difficultés à atteindre la fonctionnalité liée à l'élément optique 2 souhaitée, etc.). Du fait de la transmission de ces données internes et les informations externes, le suivi et/ou le contrôle du système ophtalmique 1 peut notamment être réalisé à distance.

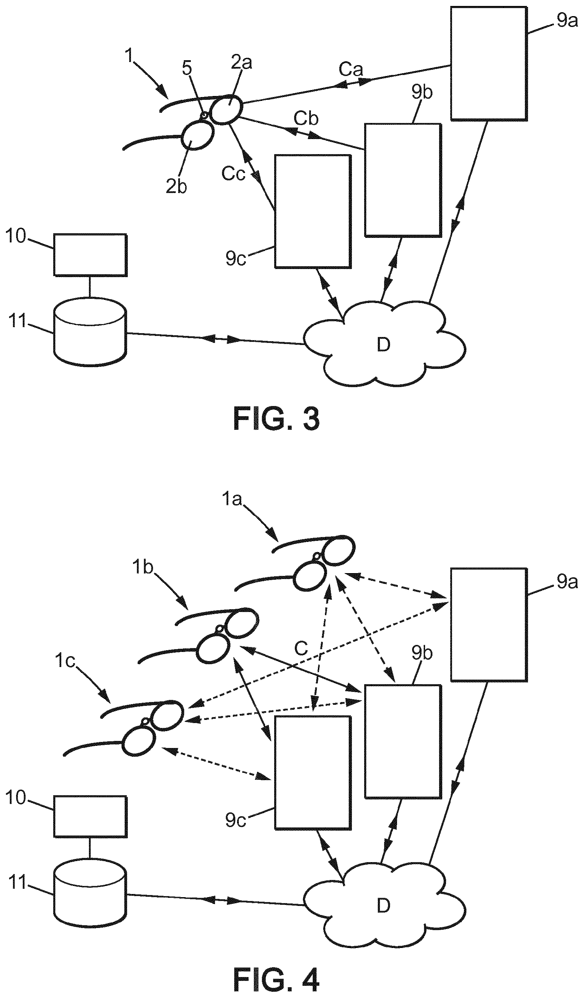

On décrit ci-après le procédé selon un deuxième et un troisième mode de réalisation de l'invention illustrés respectivement par les figures 3 et 4.

Selon le deuxième mode de réalisation, un ensemble comprend un système ophtalmique 1 et une pluralité de dispositifs électroniques externes communiquant 9a, 9b, 9c. Selon ce deuxième mode de réalisation, le système ophtalmique peut transmettre et/ou recevoir des informations externes provenant des différents dispositifs électroniques 9a, 9b, 9c. A titre d'exemple, chaque dispositif électronique 9a, 9b, 9c peut transmettre par un même réseau de communication C ou plusieurs réseaux différents Ca, Cb, Cc, des informations externes nécessaires pour déterminer l'instruction de commande de la fonctionnalité lié à l'élément optique 2.

Selon le troisième mode de réalisation, un ensemble comprend une pluralité de systèmes ophtalmique 1a, 1b, 1c et une pluralité de dispositifs électroniques externes communiquant 9a, 9b, 9c. Selon ce troisième mode de réalisation, le système ophtalmique 1a peut transmettre et/ou recevoir des informations externes provenant des différents dispositifs électroniques 9a, 9b, 9c ainsi que des autres systèmes ophtalmiques 1b, 1c.

Ainsi, les utilisateurs des autres systèmes ophtalmiques, peuvent transmettre des données permettant de déterminer la commande de la variation de la fonctionnalité liée à l'élément optique 2.

A titre d'exemple, un ensemble de porteurs répartis dans une zone géographique peuvent mesurer séparément des données relatives à la luminosité ambiante. A partir de ces mesures et d'informations géographiques et météorologiques obtenues par les dispositifs électroniques 9a, 9b, 9c, il peut être possible d'anticiper un changement de luminosité imminent pour l'utilisateur du fait d'un passage d'un groupe de nuages par exemple, et qui a déjà mesurés par certains autres porteurs. De la même façon, **il** peut être possible d'anticiper la présence d'un obstacle à venir, comme un passage sous un tunnel.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention telle que définie dans les revendications.

## Revendications

1. Procédé de commande d'un système ophtalmique (1) comprenant :
- au moins un élément optique (2),
- au moins un capteur de mesure (5),
- au moins une interface de communication (8) avec un dispositif électronique externe communiquant (9),
- au moins un processeur (4) relié à l'élément optique (2) et apte à commander une variation d'une fonctionnalité liée à l'élément optique (2),
le procédé comprenant les étapes consistant à :
- acquérir au moins une mesure par le capteur (5) du système ophtalmique (1),
- sélectionner au moins une information obtenue par un dispositif électronique externe communiquant (9), ladite information sélectionnée étant associée à une localisation et/ou une période de temps correspondant à celle(s) de la mesure acquise par le capteur (5),
- déterminer une instruction à partir de la mesure acquise par le capteur (5) et de l'information obtenue par le dispositif électronique externe communiquant (9), ladite instruction étant déterminée de façon automatisée à partir d'un modèle prédéterminé de la fonctionnalité de l'élément optique (2) en fonction de ladite mesure acquise combinée à ladite information obtenue, et
- exécuter l'instruction par le processeur (4) pour commander la variation de la fonctionnalité liée à l'élément optique (2).

2. Procédé selon la revendication 1, dans lequel la détermination de l'instruction est effectuée par le dispositif électronique (9), le procédé comportant en outre l'étape de :
- transmettre l'instruction depuis le dispositif électronique (9) au processeur (4) du système ophtalmique (1) avant d'exécuter l'instruction pour commander la variation de la fonctionnalité liée à l'élément optique (2).

3. Procédé selon la revendication 1, dans lequel la détermination de l'instruction est effectuée par le processeur (4) du système ophtalmique (1), le procédé comprenant en outre l'étape de :
- transmettre l'information sélectionnée depuis le dispositif électronique (9) au processeur (4) du système ophtalmique (1) avant de déterminer l'instruction à partir de la mesure acquise par le capteur (5) et de l'information sélectionnée.

4. Procédé selon l'une quelconque des revendications précédentes, dans lequel, après la commande de la variation de la fonctionnalité liée à l'élément optique (2), le procédé comprend en outre les étapes de :
- modifier à partir d'une interface homme-machine la variation de la fonctionnalité du système ophtalmique (1), et
- adapter le modèle de la fonctionnalité de l'élément optique (2) en fonction de la modification de la fonctionnalité effectuée à partir de l'interface homme-machine.

5. Procédé selon l'une quelconque des revendications précédentes, dans lequel la mesure acquise par le capteur (5) comprend au moins un élément parmi :
- une mesure de proximité ;
- une mesure de géolocalisation ;
- une mesure d'accélération ;
- une mesure gyroscopique ;
- une mesure de pression ;
- une mesure de température ;
- une mesure de suivi d'un mouvement d'au moins un œil ;
- une mesure de télémétrie ;
- une collecte d'énergie, en particulier une énergie électrique, mécanique ou thermique ;
- un signal audio ;
- un signal vidéo ;
- une mesure d'intensité lumineuse dans au moins une bande de fréquence du spectre électromagnétique.

6. Procédé selon l'une quelconque des revendications précédentes, dans lequel le dispositif électronique (9) est un téléphone portable, une tablette numérique, une montre connectée, un ordinateur de bureau, un ordinateur portable, un serveur distant accessible via internet, un dispositif intégré dans un véhicule automobile, un vêtement, une paire de chaussures, un masque, un accessoire ou une paire de lunettes comportant des verres connectés.

7. Procédé selon l'une quelconque des revendications précédentes, dans lequel l'information obtenue par le dispositif électronique (9) comprend au moins un élément ou une combinaison d'éléments parmi :
- une information météorologique ;
- une information de géolocalisation ;
- une information horodatée ;
- une information relative à un environnement de l'utilisateur du système ophtalmique (1) ;
- une information relative à une mesure du capteur (5) précédemment acquise et/ou une valeur de variation de fonctionnalité précédemment commandée du système ophtalmique (1).

8. Procédé selon l'une quelconque des revendications précédentes, dans lequel on sélectionne une pluralité d'informations à partir d'une pluralité de dispositifs électroniques externes (9a, 9b, 9c) adaptés pour communiquer avec l'interface de communication (8) du système ophtalmique (1).

9. Procédé selon l'une quelconque des revendications précédentes, dans lequel l'élément optique (2) est un verre ophtalmique de type électroactif, dans lequel la variation de la fonctionnalité liée au verre comporte une modification d'au moins une caractéristique d'une cellule électroactive comprise dans le verre.

10. Procédé selon la revendication 9, dans lequel l'élément optique (2) est un verre électrochrome, dans lequel la fonctionnalité liée à l'élément optique comprend la transmission du verre.

11. Procédé selon l'une quelconques des revendications précédentes, comportant en outre les étapes de :
- horodater la mesure acquise par le capteur (5) et l'information obtenue par le dispositif électronique (9), et
- stocker la mesure et/ou l'information horodatée dans une mémoire du dispositif électronique (9) ou dans une base de données externe (10), la base de données (10) étant adaptée pour communiquer avec le dispositif électronique (9) par un réseau de données (D).

12. Procédé selon l'une quelconques des revendications précédentes, comportant en outre les étapes de :
- géolocaliser la mesure acquise par le capteur (5) et l'information obtenue par le dispositif électronique (9), et
- stocker la mesure et/ou l'information géolocalisée dans une mémoire du dispositif électronique (9) ou dans une base de données externe (10), la base de données (10) étant adaptée pour communiquer avec le dispositif électronique (9) par un réseau de données (D).

13. Ensemble comportant :
- un système ophtalmique (1) comprenant :
• au moins un élément optique (2),
• au moins un capteur de mesure (5),
• au moins une interface de communication (8) avec un dispositif électronique externe communiquant (9), et
• au moins un processeur (4) relié à l'élément optique (2) et apte à commander une variation d'une fonctionnalité liée à l'élément optique (2),
- un dispositif électronique externe communiquant (9) adapté pour effectuer les opérations suivantes :
• réceptionner une mesure acquise par le capteur (5);
• sélectionner au moins une information, ladite information sélectionnée étant associée à une localisation et/ou une période de temps correspondant à celle(s) de la mesure acquise par le capteur (5) ;
• déterminer, à partir de la mesure acquise par le capteur (5) et de l'information, une instruction à destination du processeur (4) pour commander la variation de la fonctionnalité liée à l'élément optique (2), ladite instruction étant déterminée de façon automatisée à partir d'un modèle prédéterminé de la fonctionnalité de l'élément optique (2) en fonction de ladite mesure acquise combinée à ladite information obtenue.

## Patentansprüche

1. Verfahren zur Steuerung eines ophthalmischen Systems (1), das Folgendes aufweist:
- mindestens ein optisches Element (2),
- mindestens einen Messsensor (5),
- mindestens eine Kommunikationsschnittstelle (8) mit einer externen elektronischen Kommunikationsvorrichtung (9),
- mindestens einen Prozessor (4), der mit dem optischen Element (2) verbunden ist und eine Änderung einer mit dem optischen Element (2) verbundenen Funktionalität steuern kann,
wobei das Verfahren die folgenden Schritte aufweist:
- Erfassen mindestens einer Messung durch den Sensor (5) des ophthalmischen Systems (1),
- Auswählen mindestens einer Information, die von einer externen elektronischen Kommunikationsvorrichtung (9) erhalten wurde, wobei die ausgewählte Information mit einem Ort und/oder einem Zeitraum verbunden ist, die denen der vom Sensor (5) erfassten Messung entsprechen,
- Bestimmen einer Anweisung anhand der vom Sensor (5) erfassten Messung und der von der externen elektronischen Kommunikationsvorrichtung (9) erhaltenen Information, wobei die Anweisung automatisch anhand eines vorbestimmten Modells der Funktionalität des optischen Elements (2) in Abhängigkeit von der erfassten Messung in Kombination mit der erhaltenen Information bestimmt wird, und
- Ausführen der Anweisung durch den Prozessor (4), um die Änderung der Funktionalität in Verbindung mit dem optischen Element (2) zu steuern.

2. Verfahren nach Anspruch 1, wobei das Bestimmen der Anweisung durch die elektronische Vorrichtung (9) erfolgt und das Verfahren darüber hinaus den folgenden Schritt aufweist:
- Übertragen der Anweisung vom elektronischen Gerät (9) an den Prozessor (4) des ophthalmischen Systems (1), bevor die Anweisung zur Steuerung der Änderung der Funktionalität in Verbindung mit dem optischen Element (2) ausgeführt wird.

3. Verfahren nach Anspruch 1, wobei das Bestimmen der Anweisung durch den Prozessor (4) des ophthalmischen Systems (1) erfolgt und das Verfahren darüber hinaus den folgenden Schritt aufweist:
- Übertragen der ausgewählten Informationen vom elektronischen Gerät (9) an den Prozessor (4) des ophthalmischen Systems (1), bevor die Anweisung anhand der vom Sensor (5) erfassten Messung und der ausgewählten Information bestimmt wird.

4. Verfahren nach einem der vorhergehenden Ansprüche, wobei das Verfahren nach der Steuerung der Änderung der mit dem optischen Element (2) verbundenen Funktionalität zusätzlich die folgenden Schritte aufweist:
- Modifizieren der Funktionalität des ophthalmischen Systems anhand einer Mensch-Maschine-Schnittstelle (1), und
- Anpassen des Modells der Funktionalität des optischen Elements (2) entsprechend der über die Mensch-Maschine-Schnittstelle vorgenommenen Modifizierung der Funktionalität.

5. Verfahren nach einem der vorhergehenden Ansprüche, wobei die vom Sensor (5) erfasste Messung mindestens eines der folgenden Elemente aufweist:
- eine Näherungsmessung;
- eine Geolokalisierungsmessung;
- eine Beschleunigungsmessung;
- eine gyroskopische Messung;
- eine Druckmessung;
- eine Temperaturmessung;
- eine Messung zur Verfolgung einer Bewegung von mindestens einem Auge;
- eine telemetrische Messung;
- eine Energiegewinnung, insbesondere elektrische, mechanische oder thermische Energie;
- ein Audiosignal;
- ein Videosignal;
- eine Messung der Lichtintensität in mindestens einem Frequenzband des elektromagnetischen Spektrums.

6. Verfahren nach einem der vorhergehenden Ansprüche, wobei die elektronische Vorrichtung (9) ein Mobiltelefon, ein Tablet, eine Smartwatch, ein Desktop-Computer, ein Laptop, ein über das Internet zugänglicher Remote-Server, eine in ein Kraftfahrzeug, ein Kleidungsstück, ein Paar Schuhe, eine Maske, ein Accessoire oder eine Brille mit verbundenen Gläsern integrierte Vorrichtung ist.

7. Verfahren nach einem der vorhergehenden Ansprüche, wobei die von der elektronischen Vorrichtung (9) erhaltene Informationen mindestens eines der folgenden Elemente oder eine Kombination dieser Elemente aufweist:
- eine meteorologische Information;
- eine Geolokalisierungsinformation;
- eine mit einem Zeitstempel versehene Information;
- eine Information bezüglich der Umgebung des Benutzers des ophthalmischen Systems (1);
- eine Information, die sich auf eine zuvor erfasste Messung des Sensors (5) und/oder einen zuvor angesteuerten Wert der Änderung der Funktionalität des ophthalmischen Systems (1) bezieht.

8. Verfahren nach einem der vorhergehenden Ansprüche, wobei eine Vielzahl von Informationen aus einer Vielzahl von externen elektronischen Geräten (9a, 9b, 9c) ausgewählt wird, die für die Kommunikation mit der Kommunikationsschnittstelle (8) des ophthalmischen Systems (1) ausgelegt sind.

9. Verfahren nach einem der vorhergehenden Ansprüche, wobei das optische Element (2) ein elektroaktives Brillenglas ist, wobei die Änderung der mit dem Glas verbundenen Funktionalität eine Änderung mindestens einer Eigenschaft einer im Glas enthaltenen elektroaktiven Zelle beinhaltet.

10. Verfahren nach Anspruch 9, wobei das optische Element (2) ein elektrochromes Glas ist, wobei die mit dem optischen Element verbundene Funktionalität die Transmission des Glases beinhaltet.

11. Verfahren nach einem der vorhergehenden Ansprüche, das darüber hinaus folgende Schritte aufweist:
- Versehen der vom Sensor (5) erfassten Messung und der von der elektronischen Vorrichtung (9) erhaltenen Information mit einem Zeitstempel, und
- Speichern der mit einem Zeitstempel versehenen Messung und/oder Information in einem Speicher der elektronischen Vorrichtung (9) oder in einer externen Datenbank (10), wobei die Datenbank (10) dafür ausgelegt ist, über ein Datennetz (D) mit der elektronischen Vorrichtung (9) zu kommunizieren.

12. Verfahren nach einem der vorhergehenden Ansprüche, das darüber hinaus folgende Schritte aufweist:
- Geolokalisieren der vom Sensor (5) erfassten Messung und der von der elektronischen Vorrichtung (9) erhaltenen Information, und
- Speichern der geolokalisierten Messung und/oder Information in einem Speicher der elektronischen Vorrichtung (9) oder in einer externen Datenbank (10), wobei die Datenbank (10) dafür ausgelegt ist, über ein Datennetz (D) mit der elektronischen Vorrichtung (9) zu kommunizieren.

13. Baugruppe bestehend aus:
- einem ophthalmischen System (1), das Folgendes aufweist:
• mindestens ein optisches Element (2),
• mindestens einen Messsensor (5),
• mindestens eine Kommunikationsschnittstelle (8) für die Kommunikation mit einer externen elektronischen Kommunikationsvorrichtung (9) und
• mindestens einen Prozessor (4), der mit dem optischen Element (2) verbunden ist und eine Änderung einer mit dem optischen Element (2) verbundenen Funktionalität steuern kann,
- einer externen elektronischen Kommunikationsvorrichtung (9), die für die folgenden Vorgänge ausgelegt ist:
• Empfangen einer vom Sensor (5) erfassten Messung;
• Auswählen mindestens einer Information, wobei die ausgewählte Information mit einem Ort und/oder einem Zeitraum verbunden ist, die denen der vom Sensor (5) erfassten Messung entsprechen;
• Bestimmen einer Anweisung an den Prozessor (4) zur Steuerung der Änderung der Funktionalität des optischen Elements (2) anhand der vom Sensor (5) erfassten Messung und der Information, wobei die Anweisung automatisch anhand eines vorgegebenen Modells der Funktionalität des optischen Elements (2) in Abhängigkeit von dem erfassten Messwert in Kombination mit den erhaltenen Informationen bestimmt wird.

## Claims

1. Method for controlling an ophthalmic system (1) comprising:
- at least one optical element (2),
- at least one measurement sensor (5),
- at least one communication interface (8) for communicating with a communicating external electronic device (9),
- at least one processor (4) linked to the optical element (2) and able to control a variation of a functionality related to the optical element (2),
the method comprising the steps consisting in:
- acquiring at least one measurement by the sensor (5) of the ophthalmic system (1),
- selecting at least one item of information obtained by a communicating external electronic device (9), said selected item of information being associated with a location and/or with a time period corresponding to that (those) of the measurement acquired by the sensor (5),
- determining an instruction on the basis of the measurement acquired by the sensor (5) and of the item of information obtained by the communicating external electronic device (9), said instruction being determined in an automatic manner on the basis of a predetermined model of the functionality of the optical element (2) as a function of said acquired measurement combined with said obtained item of information, and
- executing the instruction by the processor (4) so as to control the variation of the functionality related to the optical element (2).

2. Method according to Claim 1, in which the determination of the instruction is performed by the electronic device (9), the method furthermore comprising the step of:
- transmitting the instruction from the electronic device (9) to the processor (4) of the ophthalmic system (1) before executing the instruction to control the variation of the functionality related to the optical element (2).

3. Method according to Claim 1, in which the determination of the instruction is performed by the processor (4) of the ophthalmic system (1), the method furthermore comprising the step of:
- transmitting the selected item of information from the electronic device (9) to the processor (4) of the ophthalmic system (1) before determining the instruction on the basis of the measurement acquired by the sensor (5) and of the selected item of information.

4. Method according to any one of the preceding claims, in which, after the control of the variation of the functionality related to the optical element (2), the method furthermore comprises the steps of:
- modifying from a man-machine interface the variation of the functionality of the ophthalmic system (1), and
- adapting the model of the functionality of the optical element (2) as a function of the modification of the functionality performed from the man-machine interface.

5. Method according to any one of the preceding claims, in which the measurement acquired by the sensor (5) comprises at least one element from among:
- a proximity measurement;
- a geolocation measurement;
- an acceleration measurement;
- a gyroscopic measurement;
- a pressure measurement;
- a temperature measurement;
- a measurement for tracking a movement of at least one eye;
- a telemetry measurement;
- a collecting of energy, in particular an electrical, mechanical or thermal energy;
- an audio signal;
- a video signal;
- a measurement of luminous intensity, in at least one frequency band of the electromagnetic spectrum.

6. Method according to any one of the preceding claims, in which the electronic device (9) is a mobile telephone, a digital tablet, a connected watch, a desktop computer, a laptop computer, a remote server accessible via the Internet, a device integrated into an automotive vehicle, a garment, a pair of shoes, a mask, an accessory or a pair of spectacles comprising connected lenses.

7. Method according to any one of the preceding claims, in which the item of information obtained by the electronic device (9) comprises at least one element or a combination of elements from among:
- a meteorological item of information;
- a geolocation item of information;
- a time-stamped item of information;
- an item of information relating to an environment of the user of the ophthalmic system (1);
- an item of information relating to a previously acquired measurement of the sensor (5) and/or a previously controlled value of variation of functionality of the ophthalmic system (1).

8. Method according to any one of the preceding claims, in which a plurality of items of information is selected on the basis of a plurality of external electronic devices (9a, 9b, 9c) adapted to communicate with the communication interface (8) of the ophthalmic system (1).

9. Method according to any one of the preceding claims, in which the optical element (2) is an ophthalmic lens of electroactive type, in which the variation of the functionality related to the lens comprises a modification of at least one characteristic of an electroactive cell included in the lens.

10. Method according to Claim 9, in which the optical element (2) is an electrochromic lens, in which the functionality related to the optical element comprises the transmission of the lens.

11. Method according to any one of the preceding claims, furthermore comprising the steps of:
- time-stamping the measurement acquired by the sensor (5) and the item of information obtained by the electronic device (9), and
- storing the measurement and/or the item of information time-stamped in a memory of the electronic device (9) or in an external database (10), the database (10) being adapted to communicate with the electronic device (9) by a data network (D).

12. Method according to any one of the preceding claims, furthermore comprising the steps of:
- geolocating the measurement acquired by the sensor (5) and the item of information obtained by the electronic device (9), and
- storing the measurement and/or the item of information geolocated in a memory of the electronic device (9) or in an external database (10), the database (10) being adapted to communicate with the electronic device (9) by a data network (D).

13. Assembly comprising:
- an ophthalmic system (1) comprising:
• at least one optical element (2),
• at least one measurement sensor (5),
• at least one communication interface (8) for communicating with a communicating external electronic device (9), and
• at least one processor (4) linked to the optical element (2) and able to control a variation of a functionality related to the optical element (2),
- a communicating external electronic device (9) adapted to perform the following operations:
• receive a measurement acquired by the sensor (5);
• select at least one item of information, said selected item of information being associated with a location and/or with a time period corresponding to that (those) of the measurement acquired by the sensor (5);
• determine, on the basis of the measurement acquired by the sensor (5) and of the item of information, an instruction destined for the processor (4) to control the variation of the functionality related to the optical element (2), said instruction being determined in an automatic manner on the basis of a predetermined model of the functionality of the optical element (2) as a function of said acquired measurement combined with said obtained item of information.
